# EUROPÄISCHE PATENTSCHRIFT

(11) **EP 0 492 201 B1**
(45) Veröffentlichungstag und Bekanntmachung des Hinweises auf die Patenterteilung: **14.08.1996**
(21) Anmeldenummer: 91120866.8
(22) Anmeldetag: 05.12.1991
(51) Int. Cl.: C08J 9/33, C08J 9/24, C08J 9/34, B29C 67/20, B29C 67/02

(54) **Schaumstoff-Formkörper mit verschiedenen Dichtebereichen und Verfahren zu ihrer Herstellung**
Foamed moulded articles having areas of different density, and process for their preparation
Articles moulés en mousse à domaines de densité differente et procédé pour leur production

(30) Priorität: 20.12.1990 DE 4040908
(43) Veröffentlichungstag der Anmeldung: 01.07.1992
(73) Patentinhaber: BASF Aktiengesellschaft, 67063 Ludwigshafen (DE)
(72) Erfinder: Haardt, Udo, W-6843 Biblis (DE); Tatzel, Hermann, W-6940 Weinheim (DE)

(56) Entgegenhaltungen:
- DE-A- 2 741 342
- DE-A- 3 136 044
- GB-A- 1 578 045
- DATABASE WPI, Nr.79-727 47B, DERWENT PUBLICATIONS LTD., London, GB

## Beschreibung

Die Erfindung betrifft Formkörper aus Polyolefinpartikelschaumstoffen mit verschiedenen Dichtebereichen.

Formkörper aus Polyolefinpartikelschaumstoffen haben große Bedeutung erlangt als stoßdämpfende Verpackungen und Verpackungsteile sowie als stoß- und schockabsorbierende Teile im Ausbau von Kraftfahrzeugen, z.B. als Kern von Stoßstangen, Konsolen, Armaturenbrettern o.ä. Entsprechend den gewünschten mechanischen Eigenschaften des Formteils variieren die einzelnen Formteile in Dichte und Dicke.

Der Erfindung lag die Aufgabe zugrunde, Formteile bereitzustellen, die Zonen mit unterschiedlicher mechanischer Beanspruchbarkeit aufweisen. Dazu boten sich Polyolefinpartikelschaumstoffe mit verschiedenen Dichtebereichen an. Ein Verkleben von Einzelteilen unterschiedlicher Dichte erwies sich als technisch zu aufwendig, ein Verschweißen von solchen Einzelteilen führte nicht zu brauchbaren Formteilen. überraschenderweise wurde nun gefunden, daß Formteile mit Zonen unterschiedlicher mechanischer Beanspruchbarkeit in einfacher weise in einer Form mit herausziehbaren Trennwänden hergestellt werden können.

Gegenstand der Erfindung sind Formkörper aus Polypropylenpartikelschaumstoffen vom Kristallitschmelzpunkt 125 - 155°C mit einer mittleren Dichte von 0,015 in in 0,100 g/cm³, die mindestens zwei verschiedene Bereiche aufweisen, deren Dichten sich um 0,005 bis 0,030 g/cm³ unterscheiden, wobei die Zone des übergangs zwischen den verschiedenen Dichtebereichen eine Dicke von nicht mehr als 25 mm aufweist, und dem 1- bis 4-fachen des Durchmessers der Schaumstoffpartikel entspricht.

Gegenstand der Erfindung ist ferner ein Verfahren zur Herstellung derartiger Formkörper, das dadurch gekennzeichnet ist, daß man in einer Form, die durch herausziehbare Trennwände in mindestens zwei Kammern unterteilt ist, in die einzelnen Kammern Füllungen unterschiedlicher Dichte aus Polyolefinschaumstoffpartikeln einbringt, die Partikel durch Entspannen sich ausdehnen läßt und nach dem Herausziehen der Trennwände durch Einleiten von Dampf oder Heißluft in die Form die Partikel erhitzt, so daß sie erweichen und miteinander verschweißen.

Die erfindungsgemäßen Formkörper bestehen im wesentlichen aus einem Partikelschaumstoff auf Basis eines Propylencopolymeren mit einem Schmelzpunkt zwischen 125 und 155°C, vorzugsweise zwischen 130 und 150°C, insbesondere zwischen 140 und 150°C. Als Schmelzpunkt gilt dabei das nach der DSC-Methode bestimmte Maximum beim zweiten Aufschmelzen einer Probe (Kristallitschmelzpunkt). Copolymerisate des Propylens mit 1 bis 30 Gew.-%, insbesondere 1 bis 6 Gew.-% Ethylen und/oder eines C₄ bis C₆-α-Olefins sind besonders gut geeignet.

Der Schaumstoff ist ein sogenannter Partikelschaumstoff, wie er durch Verschweißen von Schaumstoffpartikeln üblicherweise mit einem mittleren Durchmesser von 2 bis 8 mm, vorzugsweise 3 bis 6 mm, erhältlich ist. Die mittlere Dichte des Schaumstoffs, d.h. die Dichte gemittelt über alle Dichtebereiche des Formkörpers, liegt zwischen 0,015 und 0,100 g/cm³, vorzugsweise zwischen 0,020 und 0,090 g/cm³, insbesondere zwischen 0,030 und 0,080 g/cm³.

Der Formkörper weist Bereiche mit unterschiedlicher Dichte auf, wobei die hochbeanspruchbaren Zonen eine höhere Dichte zeigen. Der Dichteunterschied liegt im allgemeinen zwischen 0,005 und 0,030 g/cm³, insbesondere zwischen 0,010 und 0,025 g/cm³. Die Zone des übergangs zwischen den verschiedenen Dichtebereichen ist dabei relativ schmal und hat eine Dicke von nicht mehr als 25 mm. In der Regel entspricht die Dicke dieser Zone dem 1- bis 4-fachen des Durchmessers der verwendeten Schaumstoffpartikel.

Der Schaumstoff kann in den einzelnen Bereichen noch übliche Zusatzstoffe enthalten, wie Farbstoffe, Pigmente, Füllstoffe, Verstärkungsstoffe, Flammschutzmittel, Formtrennmittel, Antistatika, Stabilisatoren und andere Hilfsmittel in wirksamen Mengen.

Die Formteile finden vorzugsweise im Kraftfahrzeugbau Verwendung, z.B. als Türverkleidungen, Armaturenbretter, Konsolen, Sonnenblenden, Stoßdampfer und dergleichen.

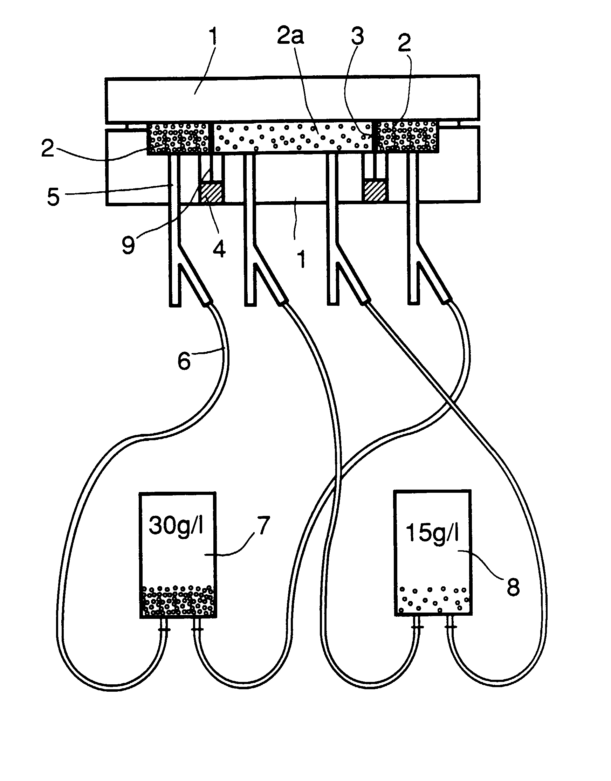

Die Herstellung der erfindungsgemäßen Formkörper erfolgt gemäß der Zeichnung vorteilhaft in einem Formwerkzeug, dessen Formhohlraum durch herausziehbare Trennwände 3 in mindestens zwei Kammern 2, 2a unterteilt ist. In die Kammern (2, 2a) werden, entsprechend den Anforderungen an den Formkörper, Füllungen unterschiedlicher Dichte aus Schaumstoffpartikeln eingebracht. Dabei kann man von Partikeln unterschiedlicher Dichte für die einzelnen Kammern ausgehen. Man kann aber auch Partikel gleicher Dichte verwenden und unterschiedliche Mengen pro Volumeneinheit in die einzelnen Kammern einfüllen. In dem in der Zeichnung dargestellten Beispiel werden die Kammern 2, 2a, die zunächst durch die Trennwände 3 voneinander getrennt sind, aus den Vorratsbehältern 7, 8 durch die Zuleitungen 5, 6 mit Schaumstoffpartikeln unterschiedlicher Dichte gefüllt. Das Füllen der Kammern erfolgt in der Regel mittels Druckluft, wobei durch den dabei verwendeten Druck von beispielsweise 0,5 bis 5 bar überdruck eine gewisse Komprimierung der Partikel erfolgt. Durch Variation des Drucks oder durch Nachpressen können so leicht unterschiedliche Füllmengen pro Volumeneinheit in die Kammern eingefüllt werden. Nach dem Entspannen versuchen die Partikel sich wieder auszudehnen und die Partikel sind miteinander derart verpreßt, daß beim Zurückziehen der Trennwände praktisch keine Materialverschiebungen in der Form erfolgt. Nach dem Füllvorgang werden die Trennwände 3 mittels der Gestänge 9 und der Druckzylinder 4 aus dem Formwerkzeug herausgezogen, und das Formwerkzeug mit Hilfe von Dampf oder Heißluft erhitzt, so daß die Schaumstoffpartikel erweichen, sich ausdehnen und miteinander verschweißen. Nach dem anschließenden Abkühlen kann der Formkörper aus dem Formwerkzeug herausgenommen werden.

## Patentansprüche

1. Formkörper aus Partikelschaumstoff auf Basis von Propylencopolymeren vom Kristallit-Schmelzpunkt 125 - 155°C mit einer mittleren Dichte von 0,015 bis 0,100 g/cm³, die mindestens zwei verschiedene Bereiche aufweisen, deren Dichte sich um 0,005 bis 0,030 g/cm³ unterscheiden, wobei die Zone des Übergangs zwischen den verschiedenen Dichtebereichen eine Dicke von nicht mehr als 25 mm aufweist und dem 1- bis 4-fachen des Durchmessers der Schaumstoffpartikel entspricht.

2. Verfahren zur Herstellung von Formkörpern gemäß Anspruch 1, dadurch gekennzeichnet, daß man in einer Form, die durch herausziehbare Trennwände in mindestens zwei Kammern unterteilt ist, in die einzelnen Kammern Füllungen unterschiedlicher Dichte aus komprimierten Polypropylenschaumstoffpartikeln einbringt, die Partikel durch Entspannen sich ausdehnen läßt, und nach dem Herausziehen der Trennwände durch Einleiten von Dampf oder Heißluft in die Form die Partikel erhitzt, so daß sie erweichen und miteinander verschweißen.

3. Verfahren zur Herstellung von Formkörpern gemäß Anspruch 2, dadurch gekennzeichnet, daß man die einzelnen Kammern mit Polypropylenschaumstoffpartikeln unterschiedlicher Dichte füllt.

4. Verfahren zur Herstellung von Formkörpern gemäß Anspruch 2, dadurch gekennzeichnet, daß man von Polypropylenschaumstoffpartikeln gleicher Dichte ausgeht und die einzelnen Kammern mit unterschiedlichem Druck füllt oder bei der Füllung in unterschiedlicher Weise nachpreßt.

## Claims

1. A molding made from particle foam based on a propylene copolymer of crystallite melting point 125-155°C, having a mean density of from 0.015 to 0.100 g/cm³ and having at least two different regions whose densities differ by from 0.005 to 0.030 g/cm³, the transition zone between the different density regions having a thickness of not more than 25 mm and corresponding to 1 to 4 times the diameter of the foam particles.

2. A process for the production of a molding as claimed in claim 1, which comprises introducing fillings of various densities made from compressed polypropylene foam particles into the individual chambers of a mold divided into at least two chambers by removable dividing walls, allowing the particles to expand by decompression, removing the dividing walls, and heating the particles by passing steam or hot air into the mold so that they soften and fuse to one another.

3. A process as claimed in claim 2 for the production of a molding, wherein the individual chambers are filled with polypropylene foam particles of various densities.

4. A process as claimed in claim 2 for the production of a molding, wherein the starting polypropylene foam particles have the same density and the individual chambers are filled at different pressures or various degrees of compression are applied during filling.

## Revendications

1. Corps moulés en mousse de particules à base de copolymère de propylène ayant un point de fusion des cristallites de 125 à 155°C avec une masse volumique moyenne de 0,015 à 0,100 g/cm³, ces corps moulés présentant au moins deux régions différentes dont les masses volumiques différent de 0,005 à 0,030 g/cm³, la zone de transition entre les régions de masses volumiques différentes ayant une épaisseur non supérieure à 25 mm et correspondant a 1-4 fois le diamètre des particules de mousse.

2. Procédé de fabrication de corps moulés selon la revendication 1, caractérisé en ce que, dans un moule qui est subdivisé en au moins deux chambres par des cloisons amovibles, on introduit dans les chambres individuelles des charges de masses volumiques différentes en particules comprimées de mousse de polypropylène, on laisse les particules se dilater par détente et, après avoir retiré les cloisons, on chauffe les particules par injection de vapeur ou d'air chaud dans le moule, de sorte qu'elles se ramollissent et se soudent entre elles.

3. Procédé de fabrication de corps moulés selon la revendication 2, caractérisé en ce que l'on remplit les chambres individuelles avec des particules de mousse de polypropylène ayant des masses volumiques différentes.

4. Procédé de fabrication de corps moulés selon la revendication 2, caractérisé en ce que l'on part de particules de mousse de polypropylène ayant la même masse volumique et on remplit les chambres Individuelles avec une pression différente ou on recomprime de manière différente lors du remplissage.
